# EUROPEAN PATENT APPLICATION

(11) **EP 4 588 816 A1**
(43) Date of publication of application: **23.07.2025**
(21) Application number: 22958872.8
(22) Date of filing: 23.09.2022
(51) Int. Cl.: B65D 19/38, B65D 19/44

(54) **METAL DRUM PALLET, FASTENING MEMBER, CONVEYANCE SYSTEM, AND USAGE METHOD**

(30) Priority: 13.09.2022 JP 2022144950
(71) Applicant: Ooparts Co., Ltd., Noda-shi, Chiba 270-0229 (JP)
(72) Inventor: KOMURA Masato, Noda-shi Chiba 270-0229 (JP); IWAMOTO Yuki, Noda-shi Chiba 270-0228 (JP)
(74) Representative: dompatent von Kreisler Selting Werner - Partnerschaft von Patent- und Rechtsanwälten mbB
(86) International application number: PCT/JP2022/035553
(87) International publication number: WO 2024/057554

(57) **Abstract**

A pallet for drums, a fastening component, a pallet system, a transport method, and the like, that are preferable for transporting drums are provided. A pallet for drums formed along a contour shape of drums is provided, and a method of transporting the pallet for drums mounted thereon in a preferable state is provided. The pallet for drums includes at least three legs, a base board, and support pads. A fastening component configured to restrain a plurality of drums can be further included. A pallet system extremely effective for recycling and reusing is provided.

## Description

### TECHNICAL FIELD

The present disclosure relates to a pallet for drums, a fastening component, a transport system, and a method of using them. The present disclosure relates to reuse, recycle, and the like.

### BACKGROUND ART

A drum is generally to be a cylindrical container mainly made of metal with a volume of 18 L or more and 400 L or less. The drum is generally categorized roughly into three types, that is, a 200-liter drum, a small and medium drum, and a pail (can). The 200-liter drum used widely is supposed to have an outside diameter of 585 mm and a height of 890 mm (see, for example, JIS Z 1601). This type of drum is generally placed on a plastic pallet, a wooden pallet, or the like and is transported (see, for example, Patent Document 1).

In recent years, the three R's of reducing (Reduce), reusing (Reuse), and recycling (Recycle) have been emphasized from the viewpoint of SDGs (Sustainable Development Goals). Steel drums can be reused. However, one-way pallet is often used although a pallet being designed to be used repeatedly (pallet used repeatedly) may be used since the pallet return and recover system can be systematized among business operators having consecutive business transactions with respect to a plastic pallet, a wooden pallet, and the like on which a drum is mounted while it is unlikely to establish such a system similar thereto among business operator not having such consecutive business transactions or for a longdistance transportation and the like such that the costs incurred in returning and recovering pallets become big issue. As is often the case with the one-way pallet, it sometimes cannot be reused due to the standard and quality issues such that most one-way pallets are disposed of as waste at a location where cargos are unpacked (such as logistic facilities and business facilities to which the cargos are delivered) after being carried in. For this reason, disposal of pallets becomes an issue.

Conventionally a pallet, such as a plastic pallet and a wooden pallet, to be used has a low-profile and a rectangular shape with a space into which a fork can be inserted. Such a pallet can be easily assembled and manufactured at a low cost, so as to be preferable. However, it cannot be said that such a pallet matches well with a cylindrical shape such as that of a drum from the appearance. On the other hand, drums placed on a rectangular pallet are arranged side by side so as to match with the rectangular shape (for example, Patent Document 2). The drums is such a state are loaded in a truck, a trailer, a container, and the like, having a rectangular (or rectangular parallelepiped) internal volume and transported. In this case, it can be thought that the rectangular pallet easily matches with the rectangular internal volume and also presumably excel in the packing efficiency; however, it cannot necessarily be said that enough number of drums are sufficiently loaded. And, with respect to the rectangular plastic pallet, the rectangular wooden pallet, and the like, restriction may be caused with respect to the fork insertion direction such as a longitudinal direction or a traverse direction.

And the drum generally has a rim which may be called chime and the rim protrudes from the bottom head or the top head, such that a contact area is rather small as compared to that of a surface on which the drum is placed. Therefore, the drum tends to slip easily on a hard installation surface. While the drum advantageously can be moved laterally with ease, when drums are transported in a state of being placed on a plastic pallet or a wooden pallet, it is necessary to secure the drums with another component to the surface on which the drums are placed (for example, Patent Document 1 or 3).

Incidentally, a marine container used for marine transportation and the like are defined by international standards (ISO standards) according to the function and the shape. The most widely distributed container is a 20-feet container or a 40-feet container and can have, for example, internal dimensions of 5,867 mm length x 2,352 mm width x 2,385 mm height. Therefore, when drums are arranged in the width direction, it is quite difficult in practice to arrange four drums, and, actually, only three drums can be arranged.

A reusable pallet device, a reuse system for a reusable pallet, and the like, have been proposed so far (for example, Patent Document 4 or 5).

### PRIOR ART DOCUMENT

### PATENT DOCUMENT

Patent Document 1: Japanese Unexamined Patent Application Publication No. H10(1998)-265055 (JP H10(1998)-265055 A)
Patent Document 2: Japanese Unexamined Patent Application Publication No. 2001-130571 (JP 2001-130571 A)
Patent Document 3: Japanese Unexamined Patent Application Publication No. 2010-132330 (JP 2010-132330 A)
Patent Document 4: Japanese Unexamined Patent Application Publication No. 2004-075185 (JP 2004-075185 A)
Patent Document 5: Japanese Unexamined Patent Application Publication No. 2006-248745 (JP 2006-248745 A).

### SUMMARY OF THE INVENTION

### PROBLEM TO BE SOLVED BY THE INVENTION

However, in the case of a pallet for drums, it is not necessarily preferable to reuse or recycle all the components in a uniform manner. It is considered that there is a component that need strength and a component suitable for recycling in a mixed manner. It is also preferable to increase the packing efficiency of drums. It is also preferable to study further an appropriate pallet for drums and a loading method of loading a pallet for drums, for a container defined by the standards in the world so as to be used. It may be preferable to prevent a side slip of the drum on a surface on which the drum is placed.

### MEANS TO SOLVE THE PROBLEM

In view of the above-described issues, according to an embodiment of the present application, parts suitable for reuse and parts suitable for disposal are distinguished therebetween such that the durability of the reusable parts is enhanced and the parts to be disposed of may be made of a material with low environmental load, and their shapes and structures can be so modified and changed that it would be easier to reuse and recycle the parts. With respect to the parts suitable for reuse, material modification and structural modification to improve durability can be made thereto. On the other hand, with respect to the parts suitable for disposal, material modification and structural modification can be made to the parts to be disposed of. Furthermore, a transport system and a transport method can be provided in order to reduce the environmental load resulting from conducting logistics with the parts.

Specifically, the followings are provided.

A pallet for a plurality of drums being placed thereon upright, comprising: at least three legs to make a predetermined clearance space from a surface on which the pallet is placed; a base board on which the legs are disposed at predetermined positions; and support pads provided on the base board, each of the support pads being configured to support at least partially weight of each of the drums,
wherein each of the support pads is capable of contacting a bottom surface of each of the drums, being located at a place other than an outer peripheral rim thereof, two of the drums get so close to each other side by side that a positional relationship between the two drums is capable of being restrained, and another of the drums is allowed to be closely placed in a recess formed by the two drums side by side such that the other drum is capable of being restrained therein, and
wherein the at least three legs are capable of supporting main weight of the two drums and the other drum.

(1) A pallet for a plurality of drums being placed thereon upright, comprising:
   at least three legs to make a predetermined clearance space from a surface on which the pallet is placed;
   a base board on which the legs are disposed at predetermined positions; and
   support pads provided on the base board, each of the support pads being configured to support at least partially weight of each of the drums,
   wherein each of the support pads is capable of contacting a bottom surface of each of the drums, the bottom surface being located at a place other than an outer peripheral rim thereof,
   wherein the support pads are provided on the base board such that, with respect to the drums supported by the support pads,
   two of the drums get so close to each other side by side that a positional relationship between the two drums is capable of being restrained, and
   another of the drums is allowed to be closely placed in a recess formed by the two drums side by side such that the another drum is capable of being restrained therein, and
   wherein the at least three legs are capable of supporting main weight of the two drums and the another drum,
   wherein the legs can be separated from the base board so as to be reused.

The drum, generally speaking, may be placed in an upright position with a circular bottom surface or a circular top surface facing or in contact with a drum placement surface with respect to a general shape of a right cylinder or placed in a horizontal position with a curved surface of a side surface of a general shape of a right cylinder faceing or in contact with the drum placement surface. The predetermined clearance space may be a clearance into which an insertion component (for example, forks and the like) of a forklift or the like can be inserted. The predetermined position may include a position as will be described later.

Here, the recyclable material may include, for example, paper, such as corrugated board. The paper is defined as "what is manufactured by agglutinating fibers of plant or others. In a broad sense, the paper includes synthetic paper that is manufactured using a synthetic polymer as a raw material and also includes paper blended with a fibrous inorganic material". For example, the paper may include "what is made by dispersing fibers in water, separating residue in a thin and flat form with a strainer, and dehydrating and drying the residue". Here, the term "recycling" may mean to regenerate and reuse those that are no longer needed or obtained collaterally as resources. For example, the recycling may include making recycled paper from raw materials including paper wastes. In a broader sense, the recyclable material may include those that are relatively easy to be disposed of. The recyclable material may be made from paper. The term "reuse" may mean reuse, which refers to using it repeatedly. The legs are preferably reusable. The reusable material is preferable. The legs are preferably made of, for example, a durable material. The legs are made of, for example, resin like polypropylene. The resin may be any of natural resin and synthetic resin. The legs may also be made of wood, metal, or inorganic compound. Furthermore, the legs may be made of a composite material including any of these materials.

The load of the drums mounted on the above-described pallet for drums is mainly supported by the legs. Therefore, the base board does not necessarily need to support the load in a cantilever manner. In a load bearing system provided by the plurality of legs, the plurality of legs are disposed and configured as a whole such that the load constituted of the weight of all the drums can be born in a stable manner and that the drum may not fall over. For example, at least one leg placed under the support pad may be disposed below or directly below the center of gravity of the drum above the at least one leg. For example, the same number of legs as the number of drums may be provided, and each of the legs may be disposed below or directly below the center of gravity of corresponding one of the drums. In addition, another leg can be provided below the combined center of gravity of all the drums. The base board does not need to bear a load in a cantilever manner but is preferably capable of withstanding tension (in the plane of the board) or compression (in the plane of the board) to a certain degree. If the drum sways due to vibration or the like, the position of the center of gravity may shift. Since the drums are mainly used to store liquid or fluid, it is expected that so-called bias in weight (on the bottom surface or the like) is small. However, sway due to vibration or the like can occur. Optimization of the preferred number, preferred arrangement, and the like, of the legs, including these dynamic variations, is desired.

At least three legs are needed to stably support a mounted object. As the number of the legs increases, the stability is generally considered to increase. However, it is necessary to ensure insertion space and insertion passage for forks, so the number of legs is preferably not too many. The spacing between the forks may be selected as needed. It is not necessary to insert the forks only in one direction, which may be necessary with respect to a rectangular pallet. The forks may be allowed to be inserted at multiple angles that may be in a wide range.

(2) Any one of the pallets for the drums as described above, wherein the base board is a plate-shaped board connecting the at least three legs.

(3) Any one of the pallets for the drums as described above, wherein the base board has a collective shape of three circles of substantially equal diameters, the circles being substantially tangential to each other in a top view,

The base board and the support pads may be made of a recyclable material, and the legs may be separable from the base board and reusable.

(4) Any one of the pallets for the drums as described above, wherein at least one of the legs is disposed at a portion of the base board, above which the support pad is provided.

(5) Any one of the pallets for the drums as described above, wherein the legs include a combined leg member.

(6) Any one of the pallets for the drums as described above, wherein, in the collective shape of three circles, each of the legs is disposed at each of respective positions located on outer sides of respective centers of the three circles along each of respective lines passing through each one of the respective centers of the three circles and a center of gravity of a triangle formed by connecting the respective centers of the three circles.

The above-mentioned triangle may signify a two-dimensional virtual one and may simply mean a shape that could be drawn. The center of gravity may mean a place that corresponds to the position of the center of gravity generally referred to in the two-dimensional triangle. The one of the respective circles may mean at least one circle of the above-described three circles.

(7) A pallet system for drums including:
any one of the above-described pallets for drums; and
a fastening component capable of mutually restraining a plurality of drums mounted on the pallet.

The above-described fastening component may include a fixing lid and/or a stopper. And the fastening component may include a fixing lid and/or a stopper, and a threaded rod including a rod. The fastening component may further include a stuffing nut and a locking part. The fastening component may directly or indirectly contact at least part of a top surface of the mounted drum to hold the drum.

(8) Any one of the above-described pallet systems for drums further including a pallet for drums capable of having one or two drums mounted thereon.

(9) A container storing a plurality of drums mounted on any one of the pallets for drums as described above.

(10) A transport method for drums including the step of storing a plurality of drums in a container using any one of the pallets for drums as described above.

(11) Any one of the above-described transport methods for drums, including the step of storing the drums in the container in a state where one of the drums is closely placed in a recess defined by other adjacent two of the drums with respect to the drums mounted on the pallet for drums.

(12) A fastening component used for any one of the pallets for drums as described above including:
a hub;
arms extending radially in three directions from the hub; and
hooks engageable with outer peripheral rims of the drums.

(13) A transport method including the steps of:
using any one of the pallets for drums as described above; and
transporting drums mounted on the pallet for drums in a state where one of the drums is closely placed in a recess defined by other adjacent two of the drums.

(14) Any one of the above-described transport methods for drums, wherein the drums mounted on the pallet for drums are loaded into a vehicle.

(15) A reuse and recycle method including: in a pallet including any one of the above-described pallets for drums, wherein a base board and support pads are made of a recyclable material; wherein legs are separated from the base board so as to be reusable; recycling the base board and the support pads; and reusing the legs.

(16) A fastening component used for any one of the above-described pallets for drums including:
a fixing lid and/or a stopper;
a rod;
a stuffing nut; and
a locking part.

Here, corrugated board generally means a plate-shaped paper product that is obtained by making paperboard strong with a multilayer structure and processed to be useable as packaging and packing materials. Corrugated board is a term of a structure formed by bonding flat paper (linerboard) and wavy paper (medium) with adhesive. Depending on the number of linerboards and mediums, corrugated fiberboard is categorized into single-faced corrugated board, double-faced corrugated board, and double-wall corrugated board. In a narrow sense, corrugated board refers to these corrugated board sheets, and the original corrugated board also refers to these sheets. Corrugated board is a material used in various corrugated board products and is a sheet-shaped (plate-shaped) one in which a fluted (corrugated) medium is bonded to a linerboard and another linerboard is bonded to the back side for reinforcement. (From "Wikipedia") Two or more corrugated board sheets can be stacked on top of each other and used. An appropriate thickness may be ensured to obtain the necessary strength.

The components such as the base board may have a top surface and a bottom surface as main surfaces. The space created by the leg components and the like may be provided such that an insertion component, such as a fork of a forklift, can be inserted. For example, the above-described space may be about 100 mm or higher from the floor (or a bottom surface of the leg component). The space may be 120 mm or higher. The space may be 150 mm or higher. If the space is too low, the insertion component cannot be inserted; whereas, if the space is too high, the height of a pallet alone or a pallet with a load may become too high. Such a pallet may not be suitable to be arranged in a container with a limited internal height. The leg component may have a support surface that bears a load from a flat plate and a spacer having a space holding function. The spacer can support the load of stacked tiles and the like to hold the space. The support surface can bear the load by contacting at least part of the bottom surface of the flat plate. The leg component may be integrally formed so as to include the spacer, the support surface, and the like. The support surface and the bottom surface may be bonded with adhesive or the like at the area of contact therebetween. The strength of the adhesion may be a strength with which the weight of the leg component can be held. For example, commercially available adhesives (which may include, for example, inorganic adhesives, organic adhesives, water-dispersion adhesives, solution adhesives, solventless adhesives, solid adhesives, and the like) may be used. The adhesion strength may be so strong that its own weight can be sustained when the pallet is lifted by the bottom surface of the flat plate with the fork or the like. When the flat plate is made of a recyclable material, such as corrugated board, the adhesion strength is preferably to such an extent that it can be easily peeled off after use. The adhesive may be, for example, adhesive, such as hot melt adhesive, that melts at high temperatures and substantially loses the adhesion strength. Mechanical joint may also be used in addition to adhesion. The mechanical joint may be, for example, a clamp or may be an attachable and detachable component, such as a hook-and-loop fastener. The material for forming may include, for example, synthetic resins such as plastics, fiber-reinforced synthetic resins, and the like. The leg component is preferably made of a recyclable or reusable material. The leg component can be removed from the flat plate to be made reusable. Some leg components may be disposed near the periphery of the flat plate in a balanced manner. At least four leg components are preferably disposed to support a flat surface. For example, the leg components can be disposed respectively near the four corners of a rectangular flat plate. In the case of a pallet on which two tiles are laid flat side by side, leg components may be further provided one by one at generally the center in the longitudinal direction. These leg components preferably have the same shape. The leg components may be, for example, categorized into two different shapes. Manufacturing becomes easier as the number of types of shape reduces.

### EFFECTS OF THE INVENTION

As described above, according to the invention of the present application, it is possible to provide the above-described pallet for drums, fastening component, transport system, method of using them, and the like, so it is possible to reduce waste and environmental load.

### BRIEF DESCRIPTION OF THE DRAWINGS

Fig. 1 is a perspective view of a pallet for drums in an embodiment of the present application.
Fig. 2 is a perspective view of the bottom surface of the pallet for drums shown in Fig. 1.
Fig. 3 is a partially sectional view of a part where leg components are attached in the pallet for drums shown in Fig. 1.
Fig. 4 is a partially sectional view of the part where the leg components are attached in the pallet for drums shown in Fig. 1.
Fig. 5A is a sectional view of the leg component constituting a leg of the pallet in the pallet for drums shown in Fig. 1.
Fig. 5B is a schematic diagram of decomposition of force of a load on the leg component in relation to an embodiment of the present invention.
Fig. 6 is a perspective view of a lid component constituting the leg of the pallet in the pallet for drums shown in Fig. 1.
Fig. 7 is a perspective view of the lid component constituting the leg of the pallet in the pallet for drums shown in Fig. 1.
Fig. 8 is a perspective view of another pallet for drums in an embodiment of the present application.
Fig. 9 is a bottom view suggesting positions where the leg components of the pallet for drums in the embodiment of the present application.
Fig. 10 is a perspective view of another pallet for drums in an embodiment of the present application.
Fig. 11 is a perspective view of another pallet for drums in an embodiment of the present application.
Fig. 12 is a perspective view suggesting a scene in which the leg components are attached in the pallet for drums of the embodiment of the present application.
Fig. 13 is a top view of a drum.
Fig. 14 is a side view of the drum (including a partially sectional view of a protruding portion at an end of a top surface).
Fig. 15A is a perspective view showing a scene in which a hand forklift is applied to a pallet for drums on which drums are mounted in an embodiment of the present application.
Fig. 15B is a schematic diagram simulating a state where forks are inserted, using the bottom view of the pallet when a hand forklift is applied to the pallet for drums in an embodiment of the present application.
Fig. 15C is an exploded perspective view showing a scene in which drums are mounted on the pallet for drums and these drums are fixed with a fixing lid in an embodiment of the present application.
Fig. 15D is a side view including a transparent part partially cut away, and showing a scene in which drums are mounted on the pallet for drums and these drums are fixed with the fixing lid in the embodiment of the present application.
Fig. 15E is a perspective view of the fixing lid for drums in an embodiment of the present application.
Fig. 15F is a perspective view of a stopper for tightening the fixing lid for drums in an embodiment of the present application.
Fig. 15G is a perspective view showing another embodiment of a pallet for drums in an embodiment of the present application.
Fig. 15H is a bottom view showing another embodiment of the pallet for drums in an embodiment of the present application.
Fig. 16A is a partial perspective view of a fastening joint using top ends of drums in an embodiment of the present application.
Fig. 16B is a partial perspective view of another fastening joint using top ends of drums in the embodiment of the present application.
Fig. 16C is a sectional exploded view (partially side view) of another fastening joint using top ends of drums in an embodiment of the present application.
Fig. 16D is a partial top view of another fastening joint using top ends of drums in an embodiment of the present application.
Fig. 16E is a partial perspective view of another fastening joint using top ends of drums in an embodiment of the present application.
Fig. 16F is a partial perspective view of another fastening joint using top ends of drums in an embodiment of the present application.
Fig. 16G is a partial perspective view of another fastening joint using top ends of drums in an embodiment of the present application.
Fig. 17 is a perspective view illustrating a container to be generally used.
Fig. 18 is a top view showing a group of pallets for drums on which drums are mounted and stored in a container with a container ceiling made transparent.
Fig. 19 is a top view showing a most densely packed state by circles simulating drums.
Fig. 20 is a top view showing an ordinary loading state by circles simulating drums.
Fig. 21 is a partial sectional perspective view of a flat plate having the material of a base board that could constitute the pallet for drums of an embodiment of the present application.
Fig. 22 is a partial sectional perspective view of a flat plate having the material of a base board that could constitute the pallet for drums of an embodiment of the present application.
Fig. 23 is a schematic diagram illustrating a system that manages recycled pallets from a drum collection site to a drum using site.

### EMBODIMENT FOR CARRYING OUT THE INVENTION

Next, an embodiment of the present invention will be described with reference to the drawings. In the drawings, like reference signs denote components and corresponding parts having the same configuration or function, and the description thereof is omitted. In the following description, only examples of the embodiment according to the present invention are described and can be modified as needed without departing from the scope of the present invention based on the common technical knowledge of a person skilled in the art. Therefore, the scope of the present invention is not limited to the specific examples. These drawings are emphasized for illustrative purposes and may differ from actual dimensions.

### EMBODIMENT 1

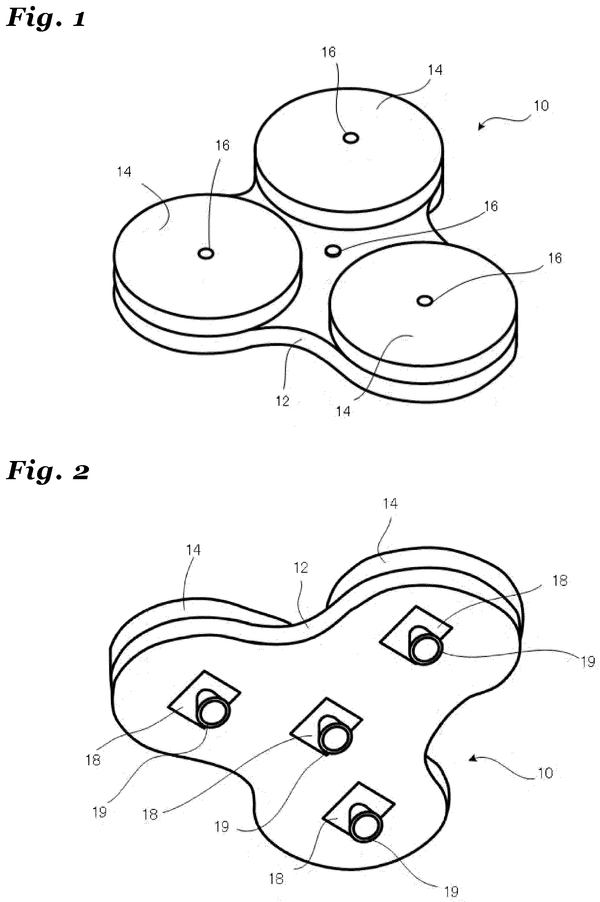

Fig. 1 is a perspective view of a pallet that is one embodiment of the invention of the present application. Fig. 2 is a perspective view of the pallet when viewed from the bottom of the pallet. The pallet 10 for drums includes a base board 12 that exhibits a three-leaf (trefoil) pattern in a top view, disk-shaped support pads 14 disposed at positions of three leaves, respectively, and four legs 19 disposed at four substantially rotationally symmetric positions on the bottom surface side of the base board 12. The base board 12 and the support pads 14 may be made of a recyclable material, such as corrugated board. Leg attachment openings 16 are provided around respective centers of the base board 12 and the support pads 14. The legs 19 can bear a load from the base board 12 via leg support plates 18. Installation specifications, an installation method, and the like, will be described later. The leg 19 may be comprised of a reusable component or reusable components. The leg 19 may be comprised of a recyclable material. Typically, resin, engineering plastics, and the like, may be used. The legs 19 and/or the leg support plates 18 can be removed from the base board 12 and so on. The legs 19 and/or the leg support plates 18 may be configured to be attachable and detachable. The support pad 14 may bear the load of a mounted drum by contacting the bottom surface of the drum.

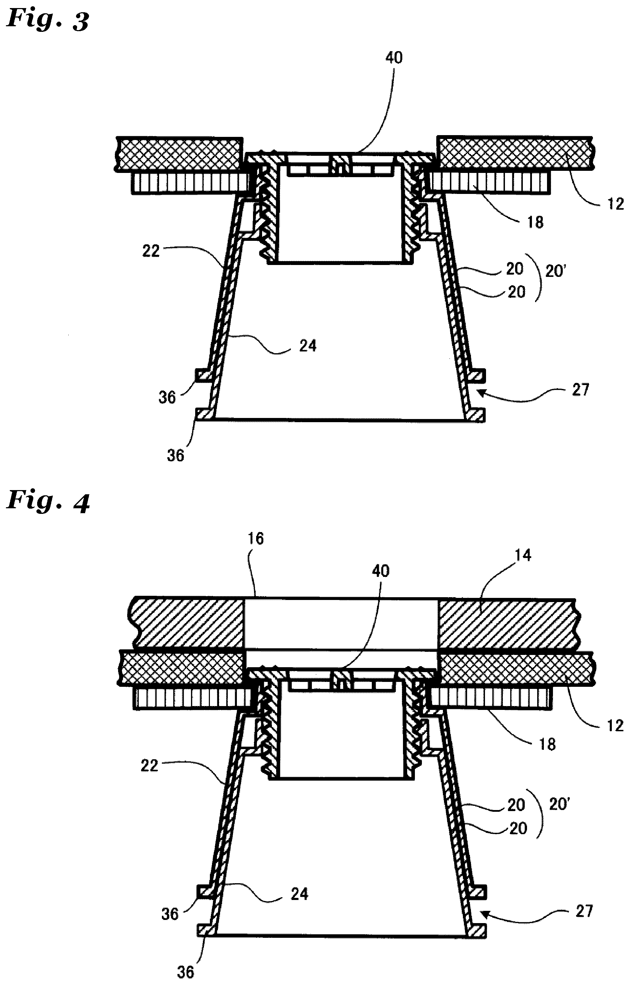

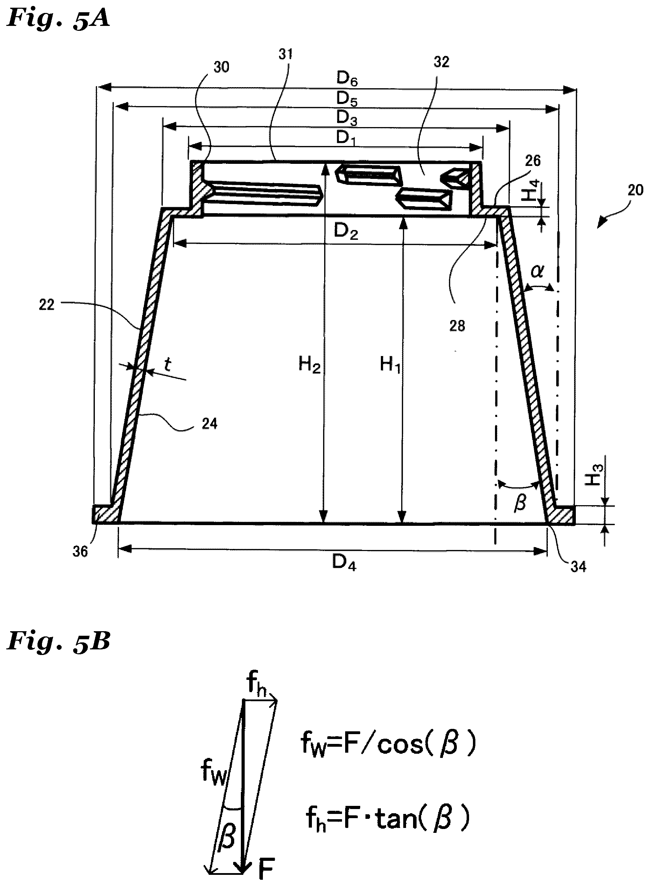

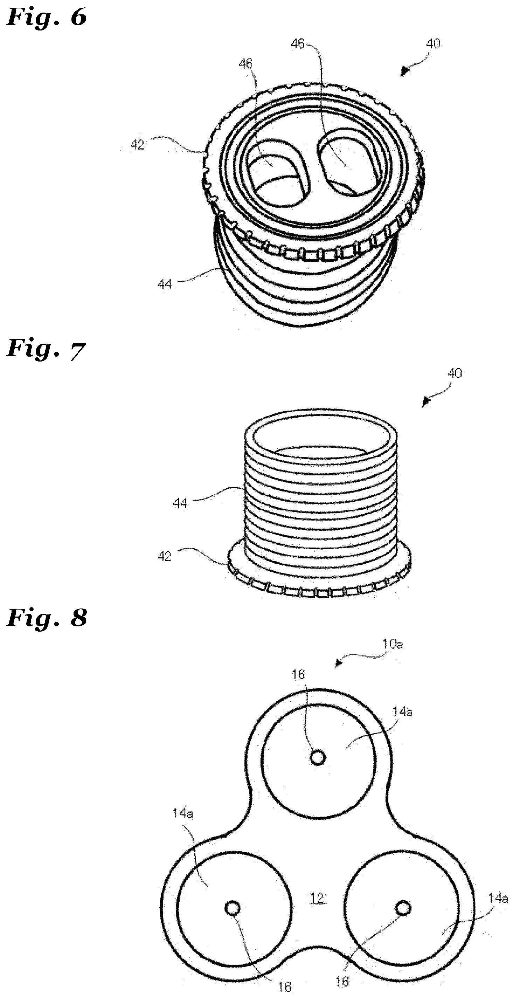

Figs 3 and 4 are side sectional views of a combined leg member 20' that is installed and constitutes the leg, which is configured by stacking leg components 20, 20 by inserting a top part of one of the leg components 20 into a bottom opening 34 of the other one of the leg components 20 that are components of the leg 19. The insertion leg component 20 and the receiving leg component 20 may have the same shape or different shapes. For example, the height of the insertion leg component 20 may be relatively low. A threaded portion 44 of a common lid component 40 is screwed into an internal partially-threaded portion 32 of a thin-walled cylindrical part 30 of the insertion leg component 20 and is screwed into a corresponding internal partially-threaded portion 32 of the receiving leg component 20 (see Figs. 6 and 7). In this way, the combined leg member 20' comprised of the leg components 20, 20 becomes one member, and the load as described above is transmitted from an inner side surface 24 of the receiving leg component 20 via an outer side surface 22 of the insertion leg component 20 that is in contact with the inner side surface 24, and is supported by and transmitted to a side wall of the insertion leg component 20. The load is transmitted from the bottom surface of the insertion leg component 20 to the installation surface (the surface on which the pallet is put), and the installation surface supports the weight of the pallet 10 for drums including objects mounted thereon. Each of the leg components 20 has a general shape of thin-walled hollow right circular truncated cone and is comprised of an annular mounting surface 26 at a top part of the circular truncated cone and a substantially vertically upright thin-walled cylindrical part 30 provided at an inner circumference of the annular mounting surface 26 such that the top end has an annular shape (Fig. 5A). The above-described load may also be transmitted from the lower surface of the annular part constituting the mounting surface 26 of the receiving leg component 20 to the top end of the thin-walled cylindrical part 30 of the insertion leg component 20. As is apparent from Figs. 3 and 4, these are substantially in contact with each other. In the combined leg member 20', the height of the insertion leg component 20 may be to a certain degree such that a bottom surface of a ring component 36 of the receiving leg component 20 does not contact a top surface of a ring component 36 of the insertion leg component 20. The bottom surface and top surface of the ring components 36 may contact each other due to deformation caused by the weight of the pallet 10 for drums on which mounted objects are mounted. There may be a gap 27.

Also, it is shown that the thin-walled cylindrical part 30 of the leg component 20 is inserted in the opening of the leg support plate 18 and the opening of the base board 12, which are mounted on the mounting surface 26 in this order, and the lid component 40 is screwed in the internal partially-threaded portion 32 of the thin-walled cylindrical part 30 in a cross-section view. The leg support plate 18 and the base board 12 are held between a head 42 of the lid component 40 and the mounting surface 26. In this case, no other elements such as adhesive or fastening components are needed. This is because the frictional force and clamping force between the outer periphery of the thin-walled cylindrical part 30 and the opening and the side face of the opening are sufficient to hold the leg components 20 (and the lid component 40). However, sticky material may be used as a supplement. The leg components 20 support the load of the mounted objects (such as drums) mounted on top of the leg components 20, the base board 12, and so on, in such a manner that the bottom surface of the bottom opening contacts the installation surface (the surface on which the pallet 10 is installed). The lid component 40 is mainly comprised of the head 42 and the threaded portion 44. The threaded portion 44 is screwed into the internal partially-threaded portion of the thin-walled cylindrical part extending in the same direction about the conical axis at the upper opening of the leg component 20. Two annular projections are provided on the upper surface of the head 42 so as to be spaced apart in a substantially concentric manner. The load of the mounted objects mounted on the base board 12 of the pallet 10 is transmitted to the mounting surfaces 26 via the base board 12 and the leg support plates 18. Then, the load is supported by and transmitted to the side walls defined by the outer side surfaces 22 and inner side surfaces 24 of the leg components 20 and transmitted from the bottom surface to the installation surface such that the installation surface supports the weight of the pallet 10, including the mounted objects. Also, the load may be transmitted from the lower surface of the annular part constituting the mounting surface 26 of the receiving leg component 20 to the top end of the thin-walled cylindrical part 30 of the insertion leg component 20. The ring component 36 is provided at the outer periphery of the bottom opening of each leg component 20, and the ring components 36 make up the bottom surface together.

A side sectional view of a combined leg member configured by attaching components, which is constituted of a combined leg member 30' comprised of leg components 20, 20 stacked by inserting a top part of a leg component 20 to a bottom opening of another leg component 20, is shown. It can be said that the insertion leg component 20 has substantially the same shape. The threaded portion 44 of the common lid component 40, which is screwed into the internal partially-threaded portion 32 of the receiving leg component 20, is screwed into the internal partially-threaded portion 32 of the corresponding thin-walled cylindrical part 30 of the insertion leg component 20. In this way, the combined leg member comprised of the leg components 20, 20 becomes one member, and the load as described above is transmitted from the inner side surface 24 of the receiving leg component 20 via the outer side surface 22 of the insertion leg component 20 that contacts the inner side surface 24 and is supported by and transmitted to the side wall of the insertion leg component 20. The load may be transmitted from the lower face of the annular part of the mounting surface 26 of the receiving leg component 20 to the top end of the thin-walled cylindrical part 30 of the insertion leg component 20. Then, the load is transmitted from the bottom surface of the insertion leg component 20 to the installation surface, and the installation surface supports the weight of the pallet 10, including mounted objects. In this case, the height of the insertion leg component 20 may be to a certain amount such that the bottom surface of the ring component 36 of the receiving leg component 20 does not contact the top surface of the ring component 36 of the insertion leg component 20. The bottom surface and top surface of the ring components 36 may contact each other due to deformation caused by the weight of the pallet 10 on which mounted objects are mounted. There may be a gap. The gap is preferably 20 mm or less. The gap is preferably 15 mm or less. The gap may be 10 mm or less.

Fig. 5A is a sectional view showing the configuration of the leg component 20 that is a component of the leg 19 that can be a component of a pallet for drums in more detail according to one embodiment of the invention of the present application. This leg component 20 may be combined with another leg component 20 so as to configure the combined leg member 20' or may constitute the leg 19 alone. The leg component 20 is basically configured with a thin-walled hollow right circular truncated cone shape. The leg component 20 is comprised of the bottom opening 34 at the bottom, the annular mounting surface 26 at the top part of the circular truncated cone, the substantially vertically upright thin-walled cylindrical part 30 provided at the inner circumference of the annular mounting surface 26, the upper opening 31 that is the opening of the thin-walled cylindrical part 30, the inclined outer side surface 22, the inclined inner side surface 24, and the annular ring component 36 at the bottom opening 34. The inside diameter of the bottom opening 34 is a diameter D4, the inside diameter of the top part of the circular truncated cone is a diameter D2, the inclination angle of the outer side surface 22 is α degrees with respect to the conical axis, and the inclination angle of the inner side surface 24 is β degrees with respect to the conical axis. The inside diameter of the annular mounting surface 26 is D1, and the outside diameter is D3. Therefore, the area of the mounting surface 26 is π[(D3/2)^2 - (D1/2)^2]. The thin-walled cylindrical part 30 includes the internal partially-threaded portion 32 with a plurality of protrusions on the inner side of the cylindrical shape. These projections are formed by partially breaking a helical recess that is a component of an internal threaded portion. A suitable external threaded portion can be screwed here to fix the leg component 20. The inside diameter of the ring component 36 is D5, and the outside diameter is D6. The height of the hollow part of the hollow leg component 20 is H1, and the height of the leg component 20 including the thin-walled cylindrical part 30 is H2. To satisfy the above-described relationship, it is preferable that these dimensions have certain rules.

The basic shape of the present leg component 20 can generally be defined by the inside diameter D4 of the bottom or large-diameter part, (Outer inclination angle α) ≥ (Inner inclination angle β), thickness t, and internal height H1. Here, the thickness t may be the same as the height H4 of the central annular part of a small-diameter part. The thickness t can be determined by multiplying the difference between the inside diameter and the outside diameter at the same height by the cosine of the inclination angle. In other words, where the height from the bottom surface is y, the difference between the outside diameter Dout(y) and the inside diameter Din(y) at a certain height H(y) may be multiplied by cos(α (≥ β)) (t = (Dout(y) - Din(y)) × cos(α or β)). Here, substantially α = β is preferable. It is applicable that α > β. It is also applicable that α ≤ 1.1 × β. The annular ring component 36 may be another component such that an annular ring is fitted to a base part of the hollow circular truncated cone (which may include an O-ring-like hoop or the like) that fits into the base part of the hollow circular truncated cone or may be integrally formed. The distinctive dimensions are an outer peripheral diameter D6 and a thickness (or height) H3.

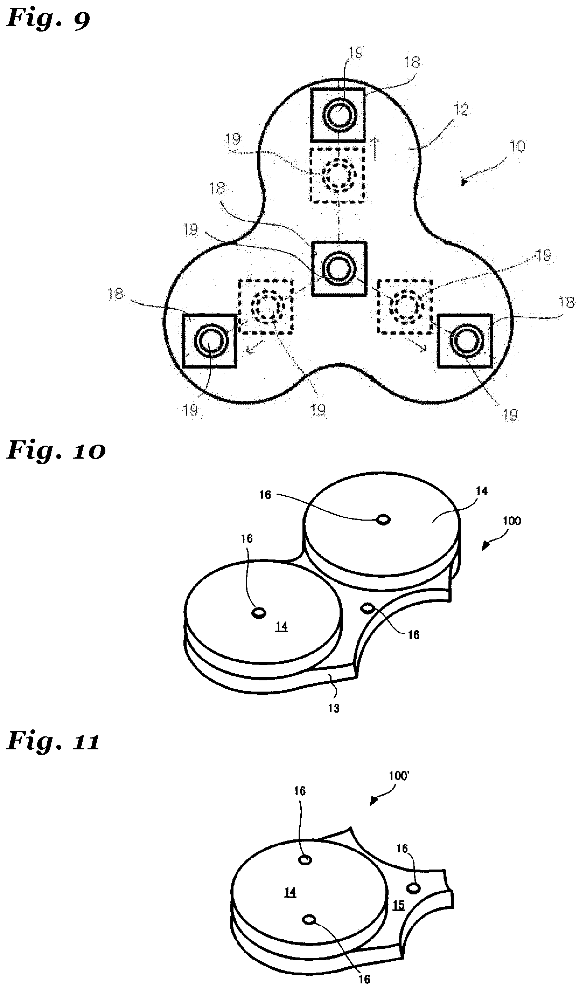

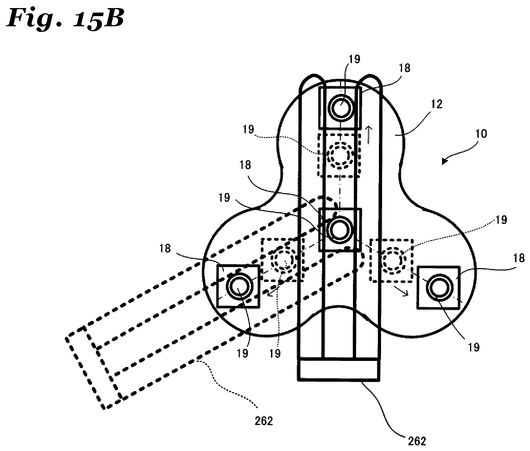

Each of the leg components 20 that are components of the pallet for drums has a function to hold a space where the tines (forks) of a forklift or the like can be inserted. For this reason, the leg component 20 preferably has a height (for example, H1) to such an extent that tines can be inserted. Specifically, H1 ≥ 50 mm is preferable. It is preferable that H1 ≥ 70 mm. It is preferable that H1 ≥ 80 mm. It is preferable that H1 ≥ 100 mm. On the other hand, it is not preferable that the height is unnecessarily too high because the maximum load capacity decreases. For example, it is preferable that H1 ≤ 700 mm. It is preferable that H1 ≤ 500 mm. It is preferable that H1 ≤ 300 mm. It is applicable that H1 ≤ 200 mm. For example, as for commercially available hand forklifts, the height of lift is generally in the range of 60 mm to 200 mm, the length of the forks is generally in the range of 1000 mm to 1200 mm, the width of the forks is generally in the range of 150 mm to 200 mm, and the spacing between the tines is generally in the range of 190 mm to 230 mm. For example, in the case of the pallet as shown in Figs. 1 and 2, it is apparent that mounted three drums are easily lifted up stably when the central leg 19 is placed between the forks (between the tines). The distance between the legs 19 disposed below the two drums is typically the length of the diameter of the drum + α (gap or the like), so the central leg 19 and the leg 19 disposed below one of the drums may be placed between the forks. In such a case, the sum of the distance between the forks and the width of the two forks is presumably typically in the range of 400 mm to 500 mm, so, as shown in Fig. 15B, the forks can be inserted in a 120-degree rotational symmetric manner. In this way, there is a high degree of flexibility in the insertion direction. As discussed with reference to Fig. 9, the insertion state of the forks in a case where the positions of the legs are shifted can be roughly simulated.

The outside diameter D5 or D6 or the inside diameter D4 that corresponds to the thickness of the leg component 20 that is a component of an assembled pallet that is a pallet for drums influences the load-bearing performance of the leg component 20. The thickness t may be defined by D4, D5, H3, and β (or α). For example, it may be t = (D5 - D4 + 2 × H3 ·tan(β))/2·cos(α or β). Where α = β = 5 degrees, H3 = 5 mm, D4 = 100 mm, and D5 = 106 mm, it may be t = 3.4 mm. For example, the compressive strength of polypropylene is approximately 40 MPa, so the leg component 20 may be crushed by about one ton. When the diameter is doubled with the inclination angle α (and β) and the thickness t kept constant, the supporting area doubles, so the load bearing improves. However, if the thickness of the leg component 20 is too large, there is a possibility that the functionality of a cargo pallet decreases since the insertion space for the tines (forks) of a forklift or the like is maintained. Specifically, it is preferable that D4 ≥ 30 mm. It is preferable that D4 ≥ 40 mm. It is preferable that D4 ≥ 50 mm. It is preferable that D4 ≥ 60 mm. It is preferable that D4 ≥ 70 mm. It is preferable that D4 ≥ 80 mm. It is preferable that D4 ≥ 90 mm. In consideration of functionality, it is preferable that D4 ≤ 300 mm. It is preferable that D4 ≤ 250 mm. It is preferable that D4 ≤ 230 mm. It is preferable that D4 ≤ 210 mm. It is preferable that D4 ≤ 200 mm. It is preferable that D4 ≤ 190 mm.

The thickness t directly affects the load-bearing area, and in a simplified manner, when the thickness t is multiplied by the length of a circumference that is the outer shape of the hollow circular truncated cone, the calculated result is equivalent to the load-bearing area. As the thickness t reduces, the weight of the leg component 20 can be reduced. However, in consideration of a support load, it is difficult to constitute an assembled pallet if the thickness t is too thin. From the viewpoint of ease of manufacturing, the thickness t is preferably not too thin. On the other hand, if the thickness t is too thick, there is a possibility that it becomes difficult to use the stacked leg components 20. There is a possibility that the weight becomes excessive. The thickness t may be determined individually in consideration of necessary load bearing and the like. For example, it is preferable that t ≥ 0.5 mm. It is preferable that t ≥ 0.7 mm. It is preferable that t ≥ 0.9 mm. It is preferable that t ≥ 1 mm. It is preferable that t ≥ 1.2 mm. It is preferable that t ≥ 1.3 mm. It is preferable that t ≥ 1.5 mm. It is preferable that t ≥ 2 mm. On the other hand, it is preferable that t ≤ 10 mm. It is preferable that t ≤ 8 mm. It is preferable that t ≤ 7 mm. It is preferable that t ≤ 6 mm. It is preferable that t ≤ 5 mm. It is preferable that t ≤ 4 mm. It is preferable that t ≤ 3 mm. Incidentally, the thickness t may be defined based on a relative ratio to the inside diameter D4 (or the outside diameter D5 or D6). For example, the thickness t may be greater than or equal to 1% of the inside diameter D4, may be greater than or equal to 1.2% of the inside diameter D4, may be greater than or equal to 1.4% of the inside diameter D4, may be greater than or equal to 1.5% of the inside diameter D4, or may be greater than or equal to 1.6% of the inside diameter D4. For example, the thickness t may be less than or equal to 10% of the inside diameter D4, may be less than or equal to 9% of the inside diameter D4, may be less than or equal to 8% of the inside diameter D4, may be less than or equal to 7% of the inside diameter D4, or may be less than or equal to 6% of the inside diameter D4.

(Outer inclination angle α) ≥ (Inner inclination angle β) is important when two or more leg components 20 of the same shape are stacked and used. The outer inclination angle α is preferably substantially equal to or slightly larger than the inner inclination angle β. When two or more legs components 20 of the same shape are stacked, the top of the leg component 20 (for example, the outside diameter indicated by D3) is inserted into the opening at the bottom (for example, the inside diameter indicated by D4), and the outer side surface 22 of the leg component 20 inserted (hereinafter, "insertion leg component") contacts the inner side surface 24 of the leg component that receives the insertion leg component (hereinafter, "receiving leg component") to block further insertion. At this time, when the outer inclination angle α is particularly smaller than the inner inclination angle β, the top of the outer side surface 22 contacts the inner side surface 24, but the bottom of the outer side surface 22 may be difficult to contact the inner side surface 24. Therefore, there is a possibility that the support load is applied to only the top of the outer side surface 22 of the insertion leg component and the inner side surface 24 of the corresponding receiving leg component to generate excessive contact pressure. For example, the outer inclination angle α is preferably larger than or equal to 0.9 times the inner inclination angle β. The outer inclination angle α is preferably larger than or equal to 0.95 times the inner inclination angle β. The outer inclination angle α is preferably larger than or equal to 0.97 times the inner inclination angle β. The outer inclination angle α is preferably smaller than or equal to 1.2 times the inner inclination angle β. The outer inclination angle α is preferably smaller than or equal to 1.1 times the inner inclination angle β. The outer inclination angle α is preferably smaller than or equal to 1.05 times the inner inclination angle β. For example, it is preferable that β ≥ 1 degree. It is preferable that β ≥ 1.2 degrees. It is preferable that β ≥ 1.4 degrees. It is preferable that β ≥ 1.5 degrees. It is preferable that β ≥ 1.7 degrees. It is preferable that β ≥ 1.9 degrees. It is preferable that β ≥ 2 degrees. On the other hand, if the inclination angle is too large, there is a possibility that the load along the wall, applied to the side wall defined by the outer side surface 22 and the inner side surface 24, becomes excessive. For example, as shown in Fig. 5B, the support load F of the leg component 20 may be decomposable into the force fw along the side wall and the force fh directed toward the center of the circle in a top view of the circular truncated cone in the horizontal direction in cross section. fw may correspond to the one obtained by dividing the support load F by cos(β). For example, when β is 3 degrees, 1/cos(β) is 1.001372346, fw is almost equal to the support load F, tan(β) is 0.052407779, and fh is about 5% of the support load F. As shown in Table 1, up to about 6 degrees of β, fw and fh do not change much, but, when β exceeds 7 degrees, particularly, fh increases to about 12% of F. When β exceeds 10 degrees, fh increases to about 17% of F. A rate of increase in fw increases when β exceeds 45 degrees. Therefore, it is preferable that β ≤ 45 degrees. It is preferable that β ≤ 35 degrees. It is preferable that β ≤ 30 degrees. It is preferable that β ≤ 25 degrees. It is preferable that β ≤ 20 degrees. It is preferable that β ≤ 15 degrees. It is preferable that β ≤ 10 degrees.

In the case where α = β, where the thickness is t, an area in which a part around the outer side surface of the insertion leg component can be inserted into the bottom of the receiving leg component with the inside diameter D4 is up to a position that is y (mm) ≥ t/2/sinα from the bottom opening surface of the insertion leg component. For example, when α = β = 1.5 degrees and t = 3 mm, the insertion leg component can enter from its top part into the hollow part of the receiving leg component to a depth of 57.30 mm from the bottom opening surface. When H1 corresponding to the height of the hollow part is 100 mm, the insertion leg component and the receiving leg component may overlap each other up to (100 - 57)/100 = 43%. The overlapping area transmits the support load from the top of the receiving leg component to the insertion leg component, and an annular surface defining the bottom opening of the insertion leg component transmits the support load to the installation surface. When the overlapping area is too small, there is a possibility that transmission of power is in a bad condition. On the other hand, when the overlapping area is too large, it is necessary to reduce the thickness t and/or increase the inclination angle. Therefore, there is a possibility that the supportable load becomes too small. Generally, it is preferable that the overlapping area is larger than or equal to 40% of H1 corresponding to the height of the hollow part. It is preferable that the overlapping area is larger than or equal to 50%. The overlapping area may be larger than or equal to 60%. The overlapping area may be larger than or equal to 70%. The overlapping area may be larger than or equal to 80%. On the other hand, considering mechanical strength, thickness t, and inclination angle, it is preferable that the overlapping area is smaller than or equal to 99%. It is preferable that the overlapping area is smaller than or equal to 98%. The overlapping area may be smaller than or equal to 97%. The overlapping area may be smaller than or equal to 95%. The overlapping area may be smaller than or equal to 93%. The overlapping area may be smaller than or equal to 91%. The overlapping area may be smaller than or equal to 90%.

When H1 corresponding to the height of the hollow part is in the range of 50 mm ≤ H1 ≤ 200 mm, the overlapping area is preferably up to a position 20 mm from the bottom opening surface of the insertion leg component. The overlapping area is preferably up to a position 25 mm. The overlapping area is preferably up to a position 30 mm. On the other hand, because it is preferable that the thin-walled cylindrical part 24 at the top part of the circular truncated cone does not contact, it is preferable that the overlapping area is larger than H2 - H1.

**[Table 1]**

| β (deg) | 1/cos (β) | tan (β) |
|---|---|---|
| 3 | 1.001372 | 0.052408 |
| 4 | 1.002442 | 0.069927 |
| 5 | 1.00382 | 0.087489 |
| 6 | 1.005508 | 0.105104 |
| 7 | 1.00751 | 0.122785 |
| 8 | 1.009828 | 0.140541 |
| 9 | 1.012465 | 0.158384 |
| 10 | 1.015427 | 0.176327 |
| 12 | 1.022341 | 0.212557 |
| 14 | 1.030614 | 0.249328 |
| 15 | 1.035276 | 0.267949 |
| 17 | 1.045692 | 0.305731 |
| 19 | 1.057621 | 0.344328 |
| 20 | 1.064178 | 0.36397 |
| 25 | 1.103378 | 0.466308 |
| 27 | 1.122326 | 0.509525 |
| 30 | 1.154701 | 0.57735 |
| 35 | 1.220775 | 0.700208 |
| 40 | 1.305407 | 0.8391 |

In the above description, transfer of load on the side surfaces when two leg components 20 are stacked has been described. The load can be transmitted not only by the contact of the side surfaces but also by the contact of the mounting surface 26 or the bottom surface 28 of the mounting surface and the top surface of the thin-walled cylindrical part 30. The majority of the load may be transmitted by the contact.

Figs. 6 and 7 show perspective views illustrating the lid component 40. The lid component 40 is comprised of the head 42 and the threaded portion 44. The head 42 has two openings 46 to allow the lid component 40 to be rotated with ease.

Fig. 8 shows a top view of a pallet 10a for drums. In this pallet, it is shown that support pads 14a are smaller than the outer edge of the base board 12. In this case, a drum to be mounted may extend beyond the outer edge of the base board 12 or may not extend beyond the outer edge of the base board 12. The support pad 14a has a sufficient size to support the major load of the drum. The leg 19 disposed below the support pad 14a is placed below the leg attachment opening 16 and support the load of the drum.

Fig. 9 shows a bottom view of the pallet 10 for drums. Here, in a sample modification, the legs 19 are disposed at positions on the outer side of the positions of Fig. 8. In this case, considering the overall balance, the legs 19 may be shifted outward in the support pads 14 spread in a three-leaf manner such that the legs 19 are disposed in a 120-degree rotationally symmetric manner. In this way, when three drums are mounted thereon, it is thought that tension may easily act on the base board 12. Such position shifts may also be considered.

Fig. 10 shows a perspective view of a pallet 100 for two drums as a modified example of the pallet for drums. This is an example in which one leaf is removed from the three-leaf pallet as shown in Fig. 1. In this case, respective drums (two drums) are supported by the legs 19 disposed at the centers of the respective support pads 14 and the leg 19 at the center of the three-leaf shape as shown in Fig. 1. Fig. 11 is an example pallet 100' in which two leaves are removed from the three-leaf pallet as shown in Fig. 1. In this case, one drum is supported by the legs 19 disposed not at the center of the support pad 14 and the leg 19 at the center of the three-leaf shape as shown in Fig. 1 at three points in total.

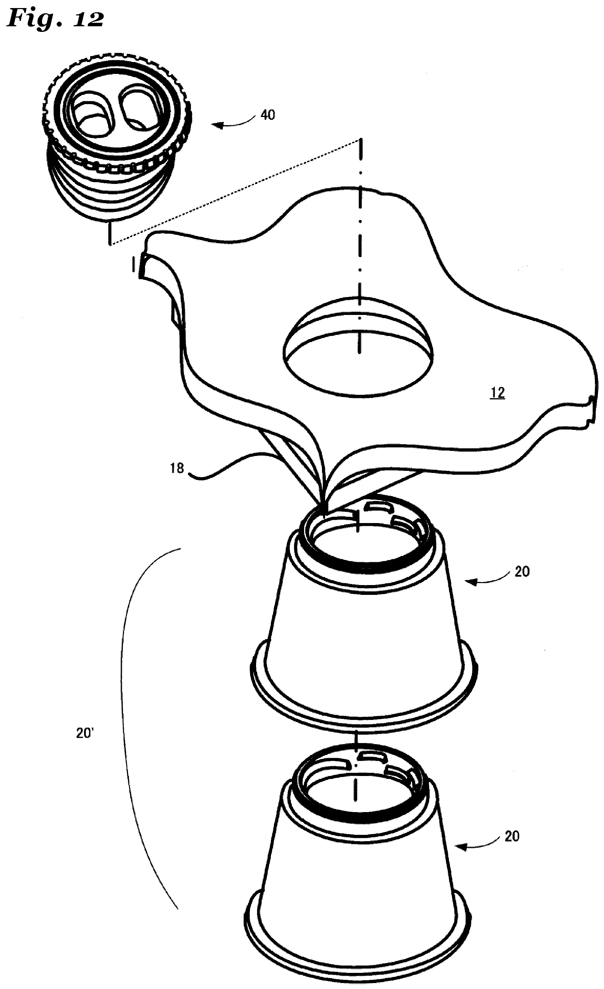

Fig. 12 shows an exploded perspective view illustrating a scene in which two leg components 20 are stacked to form a combined leg member, a thin-walled cylindrical part of a top part of the receiving leg component 20 extends through and penetrates an opening of a leg support plate and an opening of a base board 12, and a lid component 40 is screwed into the internal partially-threaded portion from above the base board. A mounted object to be mounted on the base board 12 is supported by being mounted on a mounting surface 26 of the upper leg component 20. A head 42 of the lid component 40 has two openings 46 that can work as a locking part to assist in screwing the lid component 40 into the internal partially-threaded portion and turning the lid component 40 to be removed from the internal partially-threaded portion. The outer periphery of the head 42 has a knurling that works as a friction component. Fig. 12 shows a perspective view of the lid component 40 and the leg components 20 that are arranged in an engaging direction. The leg component 20 has an knurling that provides an anti-slip function.

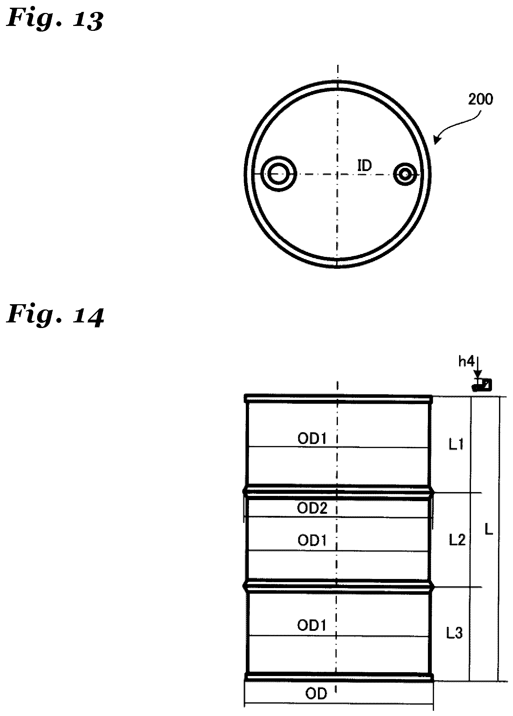

Figs. 13 and 14 show a top view and a side view of a drum. The drum 200 is a typical drum of more than 212 liters and is defined in, for example, JIS Z 1601. For example, the inside diameter of the drum is about 566 ± 2 mm, the outside diameter OD is about 585 mm, and the height L is about 890 ± 5 mm. A chime (h4) is about 22 ± 3 mm.

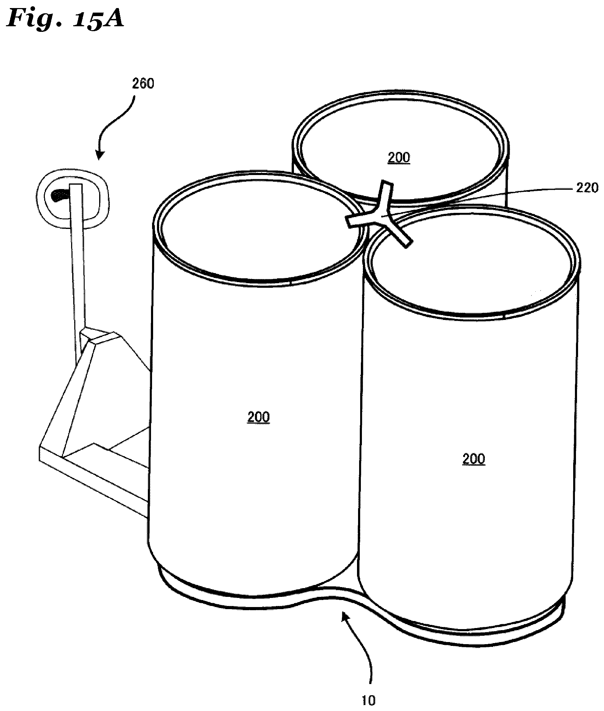

Fig. 15A shows a perspective view illustrating the pallet 10 for drums on which the drums 200 are mounted, together with a hand forklift 260, which can move them. The three drums are arranged in a so-called closest packing manner (a manner in which a recess defined by two drums allows a third drum to come into the recess). A joint (fastening component) 220 is provided to connect the third drum by hooking the edge parts of the tops of the three drums 200, respectively. It is preferable that the fastening component has a predetermined tensile strength because the fastening component supports (or restrains) the third drum so as to prevent it from removing. For example, the fastening component may be made of the same material as the legs 19.

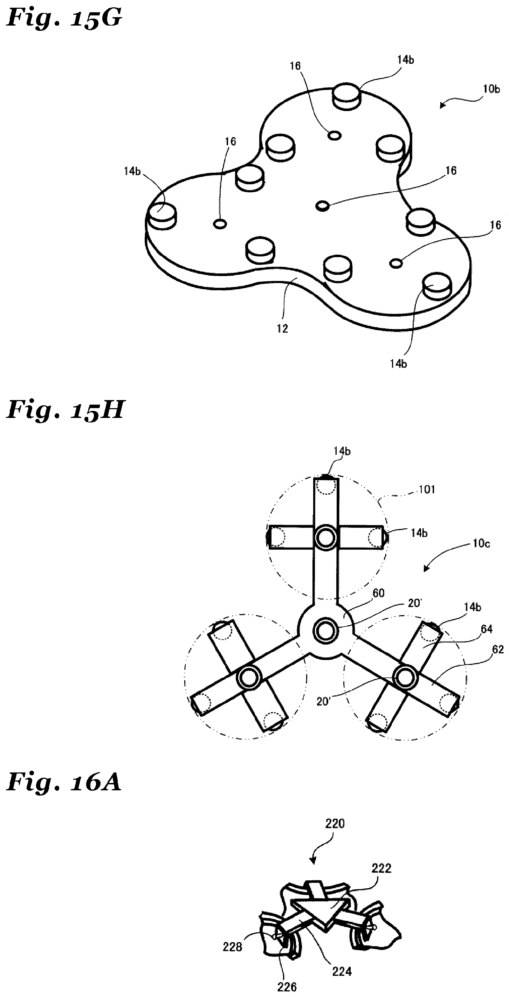

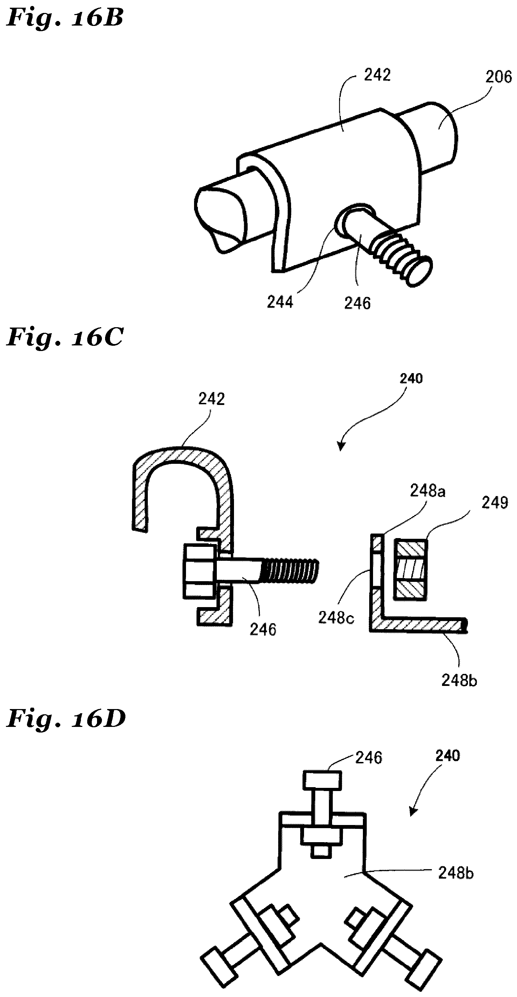

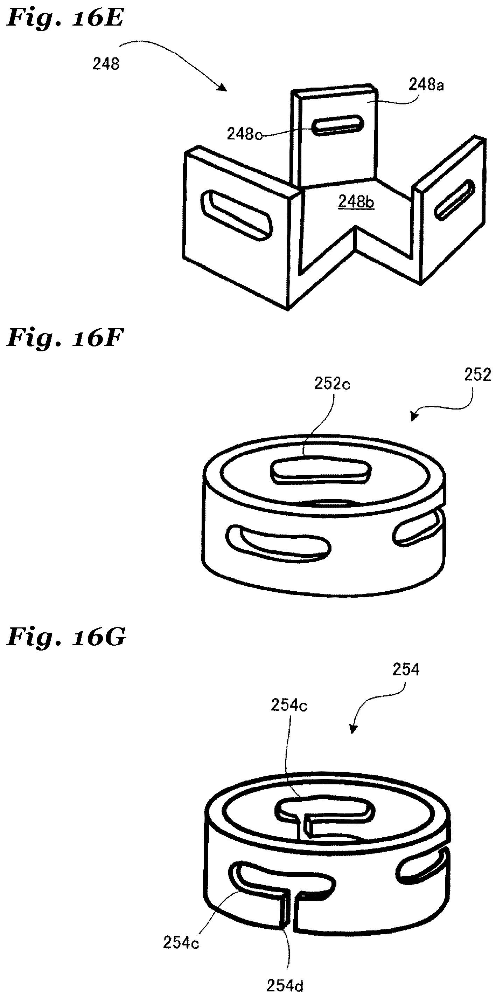

Fig. 16A shows a perspective view of one embodiment of the joint (fastening component) 220. The joint 220 has a hub 222 of a triangular shape in a top view in a center thereof, arms 224 extend radially in a 120-degree rotationally symmetric manner and each of them has a hook 226 at each tip thereof, and adjustable components (for example, bolts) 228 for fastening respective top edge parts of drums. These components may be made of metal or the like because a predetermined tensile strength is required. These components may be made of the same material as the legs 19 (the adjustable components may be made of metal).

Figs. 16B to 16E shows diagrams illustrating other joints (fastening components) 240. The joint 240 includes a mounting part 242 (corresponding to the hook) for mounting the top edge part (chime) 206 of the drum by hooking it, an opening 244 provided on a radially inner side, a bolt 246 (corresponding to the arm) penetrating the opening with a head thereof on a radially outer side, a bracket 248 constituting a hub, and a nut portion 249 mating with the bolt 246. The bracket 248 includes a central part 248b and upright parts 248a provided in a 120-degree rotationally symmetric manner. Each of the upright parts 248a has a lateral hole 248c through which the bolt 246 extends (passes). Figs. 16F and 16G show other embodiments of the bracket. Cylindrical brackets 252, 254 are highly versatile, and openings 252c, 254c are elongated laterally and allow fastening components, such as bolts, to pass through in a versatile manner. An opening 254d is open as a passage for an arm (for example, the bolt 246) to allow the arm to be covered from above. Each bracket can be a component of the fastening component 240.

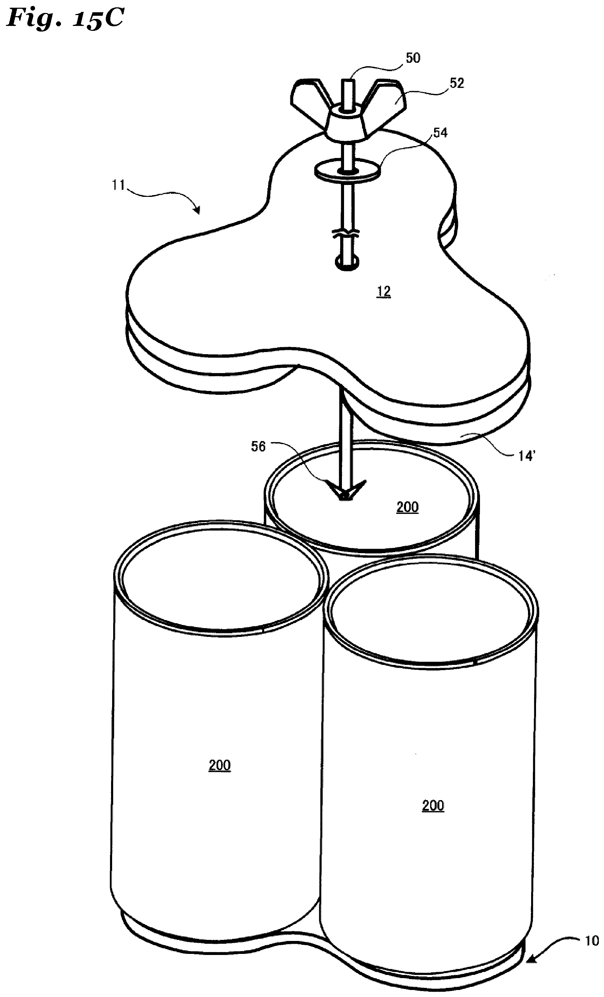

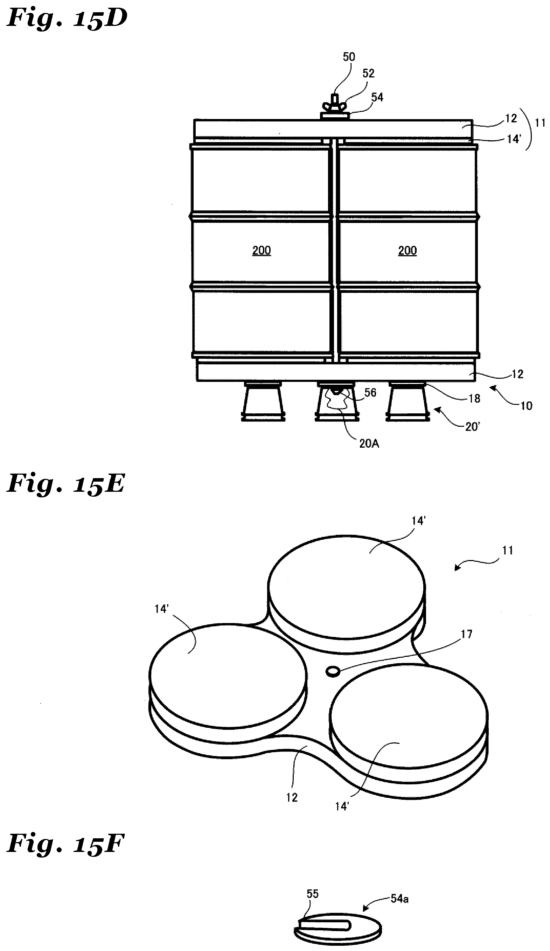

Fig. 15C shows an exploded perspective view illustrating how drums are mounted on the pallet for drums and these drums are fixed with a fixing lid in an embodiment of the present application. The procedure up to when drums are mounted on the pallet 10 for drums is the same as that of Fig. 15A, so the description thereof is omitted. The fixing lid 11 is brought close from above three mounted drums 200 such that the fixing lid 11 covers the drums 200 with fixed pads 14' facing downward. As shown in Fig. 15E, the fixing lid 11 is similar to the pallet for drums as shown in Fig. 1. The difference is that the fixed pads 14' are mounted and fixed on the base board 12 and no legs 19 are provided. A through-hole 17 is provided at the center; however, the through-hole 17 is provided to allow a threaded rod 50 for fixing the drums to pass through. The threaded rod 50 is at least partially threaded and can tighten the fixing lid 11 via a washer 54 with a stuffing nut like a butterfly nut. A locking part 56 is provided at the lower tip of the threaded rod 50. The locking part may be inserted into any one of the openings 46 of the lid component 40 and fixed to the inner side edge of the opening 46 so as not to come off. The locking part 56 may have a tip deployment part or may have a tip fixing crossbar. Fig. 15D shows a side view illustrating a pallet system for drums in which drums fixed by the fixing lid 11 are mounted. The inside of the center combined leg member 20' is allowed to be seen through a broken part being cut away therefrom. When drums are fixed in this way, the drums can firmly withstand against rolling.

In the case where the washer 54 is large enough, it should be understood that the drums can be fixed even without the fixing lid 11. The washer 54 does not necessarily need to be annular and may be a stopper 54a with a notch (opening) 55 as shown in Fig. 15F. The washer 54 does not need to be circular and may have a horseshoe shape.

Fig. 15G is a perspective view showing another embodiment of the pallet for drums in an embodiment of the present application. Up to here, the support pads 14 attached to the base board 12 each have a circular shape (disk shape) so as to be placed in the radially inner side of a recess on the top surface of each drum; however, the support pad 14 does not need to be circular as long as the support pad 14 can support the load. For example, like a pallet 10b for drums shown in the drawing, the pallet 10b for drums may include the support pads 14b having a small disk shape three by three. The reason why three support pads 14b are provided is to stably support drums. In other words, since a plane can be determined by three points, when small pads (which do not need to have a disk shape and may be rectangular), three or more points are preferably used. A recycled material has been used for support pads so far; however, the support pads are not limited thereto. The support pads may be made of wood. The support pads may be made of metal. The support pads may be made of resin. The support pads may be made of other materials or composite materials.

Fig. 15H is a bottom view showing another embodiment of the pallet for drums in an embodiment of the present application. The base board 12 has been described as being made of a recycled material; however, it is not limited thereto. The base board 12 may be made of wood. The base board 12 may be made of metal. The base board 12 may be made of resin. The base board 12 may be made of other materials or composite materials. The base board having a three-leaf shape comprised of three circles (to which the shape of drums in a top view corresponds) in a top view has been described; however, the shape of the base board is not limited thereto. For example, the base board may have a hub-and-spoke shape like a pallet 10c for drums as shown in the drawing. In the drawing, a part corresponding to the base board is comprised of a base part 60 (corresponding to a hub), spoke parts 62 (corresponding to spokes) extending radially in three directions from the base part 60, and cross boards 64 (also corresponding to the spokes) orthogonal to these spoke parts 62. The base part 60, the spoke parts 62, and the cross boards 64 may have a plate shape. The three imaginary lines 101 drawn with the alternate long and two short dashed lines correspond to the circular shapes of the radially inner sides of the bottom surfaces of the drums. Support pads 14b are provided on the top surfaces of the spoke parts 62 and cross boards 64 along these lines. These support pads 14b are similar to those of Fig. 15G.

These base part 60, spoke parts 62, and cross boards 64 have a small area in a top view, so a recycled material like paper may have insufficient strength. For example, these parts may be made of wood, metal, or resin. These parts made of wood, metal, or resin mainly have a thin plate shape, so recycling is presumably relatively easy. Of course, these parts may be recycled into recycled materials. The parts may be disposed of after use like once-through use.

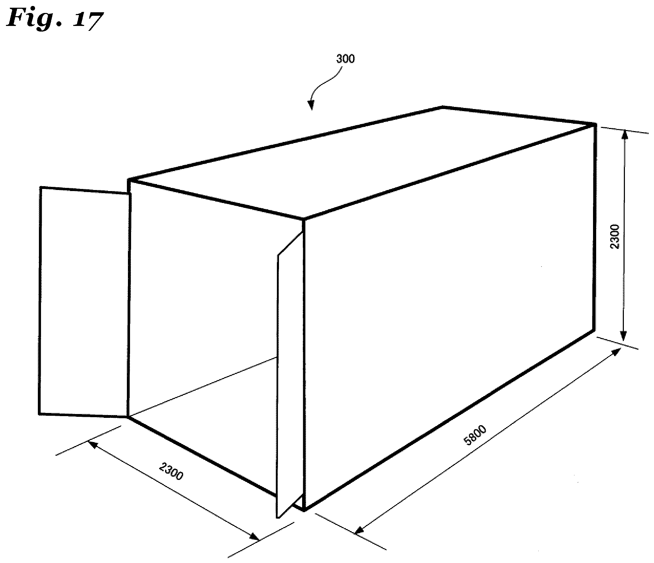

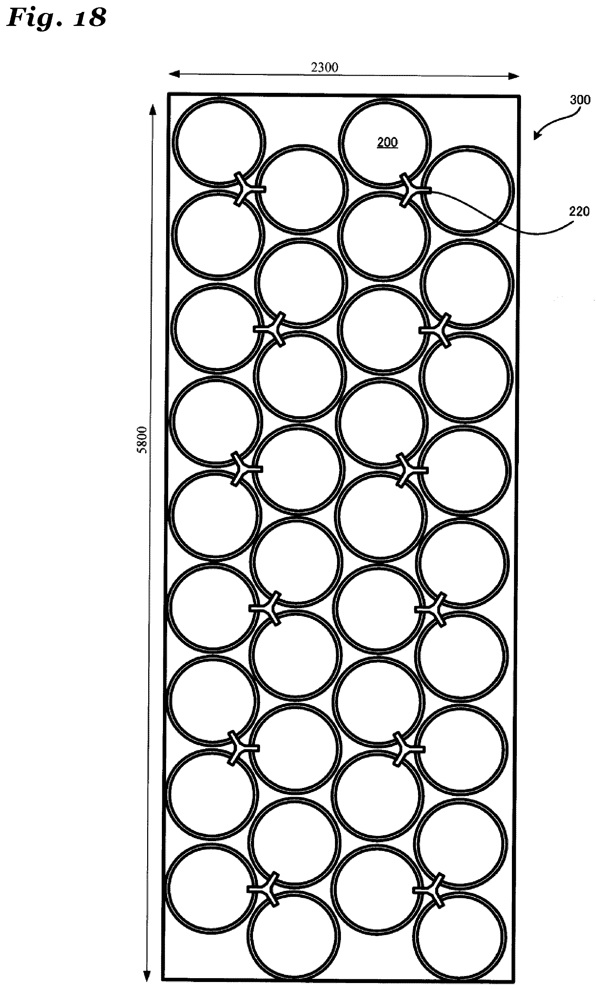

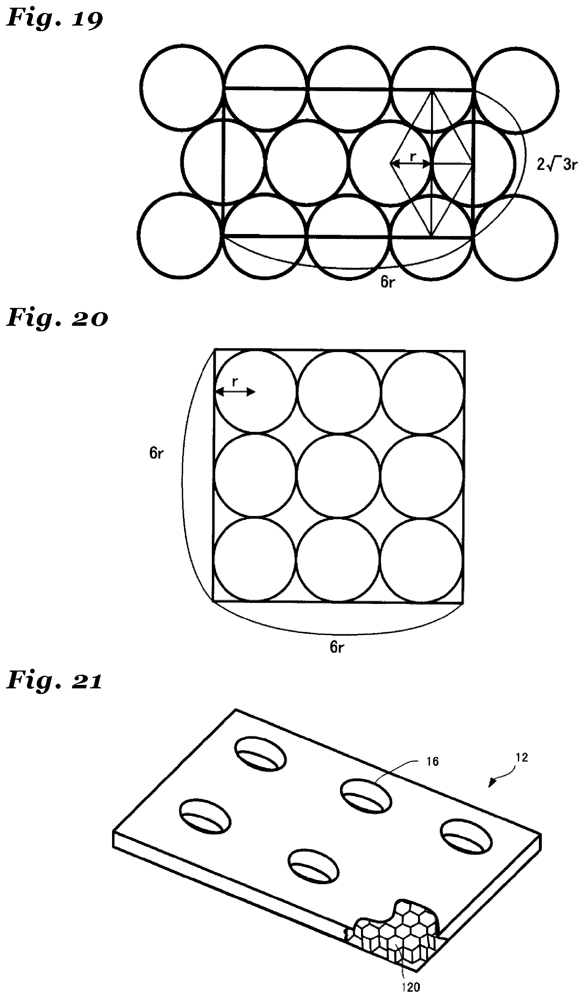

Fig. 17 shows a container 300 generally used for transportation by ship or the like. A cluster of pallets with objects mounted as shown in Fig. 15A is arranged in the container of Fig. 17, and Fig. 18 illustrates a top view thereof. In the case where it is arranged in this way, the packing efficiency of drums dramatically improves. Ordinarily, as shown in Fig. 20, drums are mounted in a so-called non-closest packing manner. Assuming that drums are mounted on a 3×3 arrangement pallet, one side needs a length that is six times the radius r of a drum as shown in Fig. 18. On the other hand, in the case of a so-called closest packing manner, as shown in Fig. 19, the packing efficiency can be improved even by 15%. In addition, since the closest packing structure is provided, drums are interlocked with each other and less likely shift. On the other hand, with the configuration as shown in Fig. 20, it almost cannot be expected that drums are mutually restrained with each other. Furthermore, as shown in Fig. 18, when drums mounted on the pallets for drums of the present application are loaded into the container 300, the drums can be loaded in the container 300 without changing kinds of pallets, such as a pallet for one drum and a pallet for two drums. In addition, while the internal dimensions of a typical container are 2300 × 5800, only 3 × 9 = 27 items can be stored in the stacking method as shown in Fig. 20. However, with the pallets for drums of the present application, 36 items can be stored. This is caused by saved space based on the typical dimensions of a typical container; and it can be expected that the loading efficiency may be increased by 30% or more. Furthermore, for example, assuming that the height of a drum is typically about 900 mm and the height of a pallet is typically about 150 mm, the internal dimension height of the container is 2300, so double stacking is also possible. When tightly loaded in this way, the inner wall of the container can directly support drums against shaking during container transport. Therefore, no separate fasteners, such as lashing belts, may be needed.

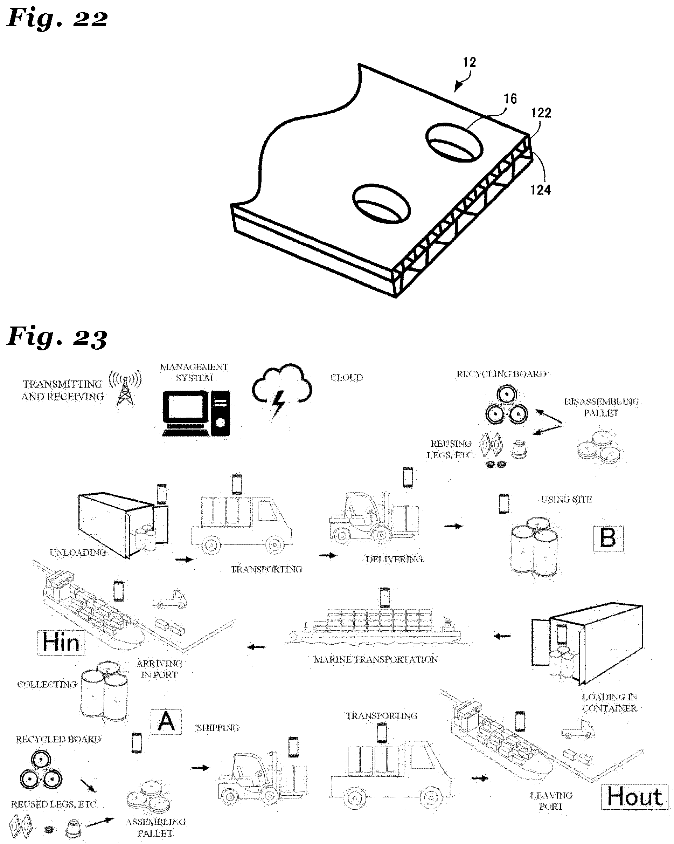

Figs. 21 and 22 illustrate a sheet material that can constitute the base board 12. Fig. 22 illustrates a corrugated fiberboard (which may be made of paper or may be made of resin) with double flutes constituted of small flutes 122 and large flutes 124. This corrugated fiberboard may have openings. Also, Fig. 21 illustrates a honeycomb board as an example with a honeycomb structure 120 arranged vertically and appearing through a broken surface component thereof. Such a honeycomb structure may be made of paper or may be made of resin. The resin may also include synthetic resin. Similarly, the honeycomb structure may have openings. Each of these components can be easily recycled once separated from the legs. However, these components are often in direct contact with mounted objects, so these components are not suitable for reuse in many cases.

Fig. 23 illustrates a system for managing drum pallets as recycled pallets from a drum collection site A to a drum usage site B. At the drum collection site A, drums filled with objects to be used or empty drums are collected. Recycled base boards and support pads are simultaneously prepared, and leg support plates, leg components, and lid components and, if necessary, fastening components to be reused are prepared. Pallets for drums are assembled from these components. The collected drums are mounted on the pallets for drums and fixed with the fastening components. A communication terminal (for example, a smartphone, a cellular phone, or the like) provided at a collection site are utilized to prepare such recycled materials and reusable materials. That is, a signal sent from the management system is delivered to the communication terminal via a cloud. In response to the signal, the communication terminal provides instructions to transport recycled materials from the nearest production site or collection site to the collection site A. The communication terminal also provides instructions to transport reusable materials from the nearest collection site to the collection site A. Then, pallets for drums are assembled from the materials collected in response to the instructions, drums are mounted on the pallets, and, if necessary, the drums are fixed with fastening components. Recycled base boards and recycled support pads may be cut out from generally recycled corrugated fiberboards available near the manufacturing site. Reusable legs may include those disassembled from pallets for drums that had been used at least once. The reusable legs have a shape and structure designed to improve the space efficiency for easier packing and transportation resulting from disassembling. Drums loaded on such pallets are shipped together with the pallets and transported by trucks and the like. At this time, information about the shipped drum-loaded pallets may be stored in the communication terminal and/or sent to the management system.

The drum-loaded pallets are transported to a port Hₒᵤₜ to use marine transportation, if necessary, and are stored in a typical container. The storing method and so on may be utilized as described in the present specification. The dimensions of the container may be typical ones. Therefore, more drums can be transported than those conventionally transported if compared. The drum-loaded pallets stored in the container are transported by a container ship. During maritime transport, although significant sway is expected due to weather condition; the inner walls of the container can prevent the drum-loaded pallets from tipping over as the method of packing the drum-loaded pallets in the container is based on the closest packing. At this time, the environmental information of the drum-loaded pallets may be automatically measured and saved in the communication terminal and/or sent to the management system. Then, the drum-loaded pallets arrive in a destination port Hᵢₙ. The port arrival date and time may be saved in the communication terminal and/or sent to the management system. At the port, the drum-loaded pallets are unloaded as is and transported by trucks and the like. Then, the drum-loaded pallets transported to the place near a drum using site may be delivered by a forklift or the like to the using site while drums are still mounted on the pallets. There is a high degree of flexibility since drums are in a small lot of three, respectively. At the site, the drums may be used as mounted on the pallets for drums or may be used after they are unloaded from the pallets. Since the fastening component is merely attached to the top edge parts of the drums, it is considered that there are no problems in opening the lids of the drums. The pallets for drums to be no longer needed are disassembled into reusable legs, recyclable boards, and so on. The recyclable base boards and support pads may be utilized in general recycling processes for corrugated fiberboard and the like. The reusable leg components, leg support plates, lid components, and so on may be, for example, stored at the using site or may be packed as appropriate and sent to a storage site or a place where they are planned to be re-used. A pallet for drums may be assembled as a recycled pallet at the above-described collection site A by utilizing the reusable leg components and so on. In this way, the amount of packing materials to become waste may be reduced, which can cut the costs as well as can benefit the environment.

Also, a communication terminal (for example, a smartphone, a cellular phone, or the like) is attached to the recycled pallets having been assembled such that the attributes (including date of manufacture, place of manufacture, and manufacturer), specifications, destination, and the like are recorded on the communication terminal. These pieces of information are sent to a computer of the management system from the communication terminal through a cloud or other communication means (wired or wireless electromagnetic communication means (radio waves, telegraph, and signals) or the like). The computer also communicates with a tile laying site or the like such that matching with needs is conducted. For example, with respect to materials filled in drums as having been prepared based on a prospective order, a site where such materials are needed is grasped as appropriate such that the destination and so on can be changed during a time period from shipping to delivery. Then, at the using site B, it is easy to grasp when the necessary materials in drums will arrive such that the using schedule can be adjusted. A system for such adjustment may include software, which may be installed on a computerized system such as a computer of the management system. An application for this purpose may also be installed on the communication terminal.

### DESCRIPTION OF THE REFERENCE NUMERALS

- 10, 10a, 10b, 10c, 100: pallet for drums
- 12: base board
- 14, 14a, 14b: support pad
- 16: leg attachment opening
- 18: leg support plate
- 19: leg (generic name)
- 20: leg component
- 22: outer side surface
- 24: inner side surface
- 26: mounting surface
- 30: thin-walled cylindrical part
- 30b: external partially-threaded portion
- 32: internal partially-threaded portion
- 34: bottom opening
- 36: ring component
- 40: lid component
- 42: head
- 44: threaded portion
- 46: opening
- 120: honeycomb structure
- 122: small flute
- 124: large flute
- 200: drum
- 220: fastening component
- 222: hub
- 224: arm
- 226: hook
- 228: adjustable component
- 260: hand forklift
- 300: container
- r: radius

## Claims

1. A pallet for a plurality of drums being placed thereon upright, comprising:
at least three legs to make a predetermined clearance space from a surface on which the pallet is placed;
a base board on which the legs are disposed at predetermined positions; and
support pads provided on the base board, each of the support pads being configured to support at least partially weight of each of the drums,
wherein each of the support pads is capable of contacting a bottom surface of each of the drums, the bottom surface being located at a place other than an outer peripheral rim thereof,
wherein the support pads are provided on the base board such that, with respect to the drums supported by the support pads,
two of the drums get so close to each other side by side that a positional relationship between the two drums is capable of being restrained, and
another of the drums is allowed to be closely placed in a recess formed by the two drums side by side such that the another drum is capable of being restrained therein, and
wherein the at least three legs are capable of supporting main weight of the two drums and the another drum.

2. The pallet for the drums according to claim 1, wherein the base board is a plate-shaped board connecting the at least three legs.

3. The pallet for the drums according to claim 1,
wherein the base board has a collective shape of three circles of substantially equal diameters, the circles being substantially tangential to each other in a top view,
the base board and the support pads are made of a recyclable material, and
the legs are separable from the base board and reusable.

4. The pallet for the drums according to any one of claims 1 to 3, wherein at least one of the legs is disposed at a portion of the base board, wherein one of the support pads is provided above the portion.

5. The pallet for the drums according to any one of claims 1 to 3, wherein the at least one of the legs includes a combined leg member.

6. The pallet for the drums according to claim 3, wherein, in the collective shape of three circles, each of the legs is disposed at each of respective positions located on outer sides of respective centers of the three circles along each of respective lines passing through each of the respective centers of the three circles and a center of gravity of a triangle formed by connecting the respective centers of the three circles.

7. A pallet system for drums comprising:
a pallet for drums according to any one of claims 1 to 6; and
a fastening component capable of mutually restraining a plurality of drums mounted on the pallet.

8. The pallet system for the drums according to claim 7, further comprising a pallet for drums capable of having one or two drums mounted thereon.

9. A container storing a plurality of drums mounted on the pallet for drums according to any one of claims 1 to 6.

10. A transport method for drums, comprising the step of storing a plurality of drums in a container using a pallet for drums according to any one of claims 1 to 6.

11. The transport method for drums according to claim 10, comprising the step of storing the drums mounted in the container in a state where one of the drums is closely placed in a recess defined by other adjacent two of the drums with respect to the drums mounted on the pallet for drums.

12. A fastening component used for a pallet for drums according to any one of claims 1 to 6, comprising:
a hub;
arms extending radially in three directions from the hub; and
hooks engageable with outer peripheral rims of the drums.

13. A transport method comprising the steps of:
using a pallet for drums according to any one of claims 1 to 6; and
transporting the drums mounted on the pallet for the drums in a state where one of the drums is closely placed in a recess defined by other adjacent two of the drums.

14. The transport method according to claim 13, wherein the drums mounted on the pallet for the drums are loaded into a vehicle.

15. A reuse and recycle method comprising:
in a pallet comprising a pallet for drums according to any one of claims 1 to 6,
wherein a base board and support pads are made of a recyclable material;
wherein legs are separated from the base board so as to be reusable;
recycling the base board and the support pads; and
reusing the legs.

16. A fastening component used for a pallet for drums according to any one of claims 1 to 6, comprising:
a fixing lid and/or a stopper;
a rod;
a stuffing nut; and
a locking part.
